# EUROPÄISCHE PATENTSCHRIFT

(11) **EP 1 848 971 B1**
(45) Veröffentlichungstag und Bekanntmachung des Hinweises auf die Patenterteilung: **25.06.2008**
(21) Anmeldenummer: 06706524.3
(22) Anmeldetag: 01.02.2006
(51) Int. Cl.: G01G 21/24

(54) **WÄGESYSTEM**
WEIGHING SYSTEM
SYSTEME DE PESEE

(30) Priorität: 05.02.2005 DE 102005005368
(43) Veröffentlichungstag der Anmeldung: 31.10.2007
(73) Patentinhaber: SARTORIUS AG, 37075 Göttingen (DE)
(72) Erfinder: KUHLMANN, Otto, 37085 Göttingen (DE); FLEISCHER, Peter, 37085 Göttingen (DE); HELMSEN, Friedrich, 37085 Göttingen (DE); FEHLING, Thomas, 37218 Witzenhausen (DE)
(86) Internationale Anmeldenummer: PCT/EP2006/000832
(87) Internationale Veröffentlichungsnummer: WO 2006/082025

(56) Entgegenhaltungen:
- DE-U1- 8 135 182
- DE-U1- 29 509 829
- GB-A- 743 764
- US-A- 3 063 670
- US-A- 3 700 289

## Beschreibung

Die Erfindung bezieht sich auf ein Wägesystem mit einem Basisbereich, mit einem parallelgeführten Lastaufnehmer, mit mindestens einem Übersetzungshebel, der durch mindestens ein Kreuzfedergelenk am Basisbereich verschwenkbar gelagert ist, und mit einem Koppelelement, das den Lastaufnehmer mit dem kurzen Hebelarm des Übersetzungshebels verbindet.

Wägesysteme dieser Art sind allgemein bekannt und zum Beispiel im deutschen Gebrauchsmuster DE-Gbm 81 35 182 beschrieben.

Nachteilig an diesem bekannten Wägesystem ist, dass durch das aus einzelnen Blattfedern aufgebaute Kreuzfedergelenk der Montage- und Justieraufwand relativ hoch ist und dass durch die Befestigung der Blattfedern am Übersetzungshebel und am Basisbereich das Kreuzfedergelenk verspannt werden kann und dadurch Hystereseeffekte, Drift und schlechte Langzeitkonstanz verursacht werden können.

Um diese Probleme zu entschärfen, ist es zum Beispiel aus der US 3 700 289 bekannt, ein Kardangelenk so zu gestalten, dass in einem äußeren Rohr durch Bohrungen die horizontalen Federstege des Kreuzfedergelenkes erzeugt werden und in einem inneren Rohr in entsprechender Weise die vertikalen Federstege.

Beim konzentrischen Zusammenfügen der beiden Rohre entstehen auf diese Weise Kreuzfedergelenke. Aber auch hier ist der Fertigungs- und Montageaufwand hoch, da die Kreuzungspunkte der horizontalen und der vertikalen Federstege sehr genau zueinander ausgerichtet sein müssen, um Zwangskräfte beim Verschwenken zu vermeiden.

Weiter ist es aus der US 3 063 670 bekannt, ein Kreuzfedergelenk mit einer senkrechten und zwei waagerechten Blattfedern aus einem würfelförmigen Block durch Fräsungen herauszuarbeiten. Dazu sind jedoch Bahnfräsungen aus vier verschiedenen Richtungen mit relativ großem Zerspanungsvolumen notwendig, so dass die Fertigung zeitaufwändig ist.

Aufgabe der Erfindung ist es daher, ein verbessertes Kreuzfedergelenk für ein Wägesystem der eingangs genannten Art anzugeben, das einfach herstellbar ist und möglichst keine Hysterese zeigt.

Erfindungsgemäß wird dies erreicht durch ein Wägesystem mit einem Basisbereich , mit einem parallelgeführten Lastaufnehmer , mit mindestens einem Übersetzungshebel , der durch mindestens ein Kreuzfedergelenk am Basisbereich verschwenkbar gelagert ist, und mit einem Koppelelement, das den Lastaufnehmer mit dem kurzen Hebelarm des Übersetzungshebels verbindet, wobei das Kreuzfedergelenk, zumindest ein Teil des Übersetzungshebels und zumindest ein Teil des Basisbereiches monolithisch aus einem Block herausgearbeitet sind und zumindest ein Federsteg des Kreuzfedergelenkes zwei voneinander beabstandete Materialdünnstellen aufweist.

Durch die monolithische Bauweise müssen die einzelnen Federn des Kreuzfedergelenkes nicht verschraubt, verschweißt oder in anderer Weise mit dem Basisbereich und dem Übersetzungshebel verbunden werden, sodass das Einbringen von Spannungen beim Zusammenfügen von vornherein vermieden wird.

Die monolithische Bauweise von Wägesystemen ist an sich bereits aus dem Gebrauchsmuster DE 295 09 829 U1 bekannt; dort sind für die Lagerung des Übersetzungshebels jedoch keine Kreuzfedergelenke vorgesehen, sondern vertikale Einzelfedern. Einzelfedern lassen sich viel leichter monolithisch integrieren, da bei ihnen keine Kreuzungspunkte von Federstegen auftreten. Hinweise auf eine monolithische Bauform von Kreuzfedergelenken lassen sich aus dem oben angegebenen Gebrauchsmuster nicht entnehmen. Außerdem sind Einzelfedern bezüglich Transportsicherheit der Wägesysteme sehr viel kritischer als Kreuzfedern, sodass sie Kreuzfedergelenke häufig nicht ersetzen können.

Eine monolithische Herstellung mit vertretbarem Aufwand ist erst dadurch möglich, dass zumindest einer der Federstege, die das Kreuzfedergelenk bilden, zwei voneinander beabstandete Materialdünnstellen aufweist. Dadurch entfällt die Materialdünnstelle in der Drehachse des Kreuzfedergelenkes, die sich dort nur unter erheblichen technologischen Aufwand fertigen ließe, und ist ersetzt durch zwei Materialdünnstellen außerhalb der Drehachse. Dort ist eine viel leichterere Fertigbarkeit gegeben. Vorteilhafterweise können zum Beispiel durch vier waagerechte, parallel zur Drehachse des Kreuzfedergelenkes verlaufende Bohrungen die Konturen der Federstege des Kreuzfedergelenkes in den wesentlichen Umrissen aus einem Block herausgearbeitet sein.

Vorteilhafte Ausgestaltungen ergeben sich aus den Unteransprüchen.

Die Erfindung wird im Folgenden anhand der schematischen Zeichnungen beschrieben. Dabei zeigt:
Fig. 1 ein Wägesystem in perspektivischer Ansicht,
Fig. 2 die für die Erfindung wesentlichen Teile des Wägesystems in einer ersten Ausführungsform in perspektivischer Ansicht,
Fig. 3 die Ausführungsform aus Fig. 2 in perspektivischer Ansicht aus einer anderen Richtung
Fig. 4 die Ausführungsform aus Fig. 2 und 3 in Seitenansicht
Fig. 5 die für die Erfindung wesentlichen Teile des Wägesystems in einer zweiten Ausführungsform in perspektivischer Ansicht,
Fig. 6 die Ausführungsform aus Fig. 5 in Seitenansicht,
Fig. 7 die für die Erfindung wesentlichen Teile des Wägesystems in einer dritten Ausführungsform in perspektivischer Ansicht,
Fig. 8 die für die Erfindung wesentlichen Teile des Wägesystems in einer vierten Ausführungsform in perspektivischer Ansicht,
Fig. 9 die Ausführungsform aus Fig. 8 in perspektivischer Ansicht aus einer anderen Richtung und
Fig. 10 die Ausführungsform aus Fig. 8 und 9 in Seitenansicht.

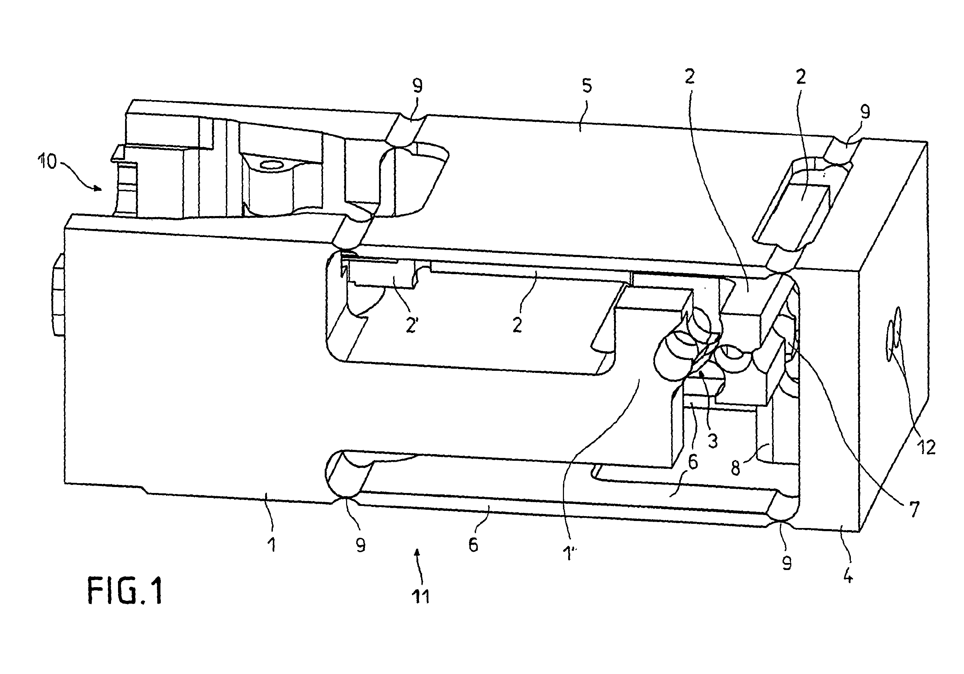

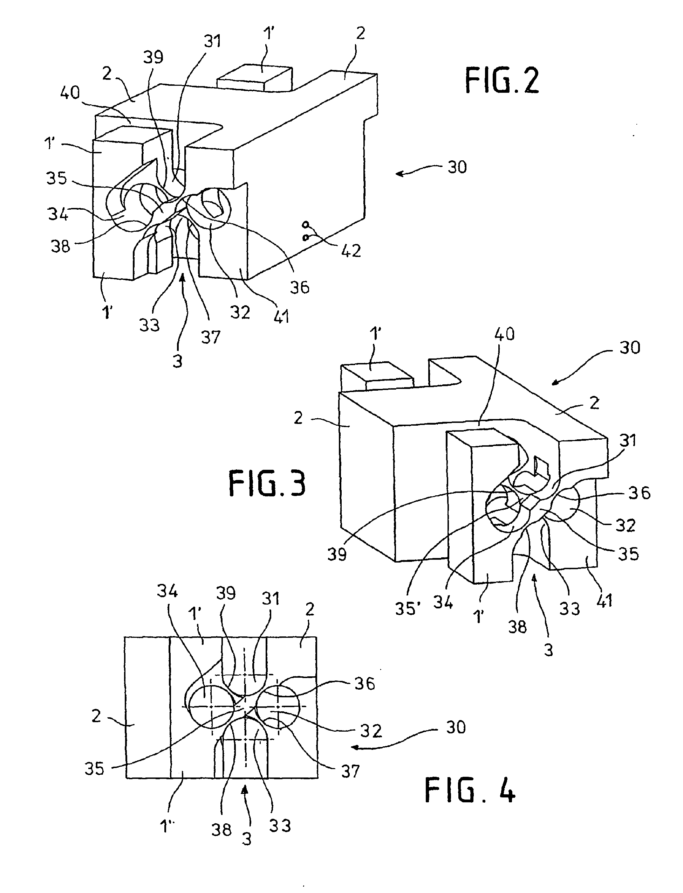

Das in Fig. 1 in einer perspektivischen Ansicht gezeigte Wägesystem 11 besteht aus einem gehäusefesten Basisbereich 1 und einem Lastaufnehmer 4, der durch einen oberen Lenker 5 und einen unteren Lenker 6 in Form einer Parallelführung in senkrechter Richtung beweglich mit dem Basisbereich verbunden ist. Die als Gelenkstellen wirkenden Materialdünnstellen sind mit 9 bezeichnet. Die am Lastaufnehmer 4 angreifende Gewichtskraft des Wägegutes, die zum Beispiel an den Bohrungen 12 eingeleitet wird, wird über einen Vorsprung 8 und ein in Fig. 1 nur teilweise sichtbares Koppelelement 7 auf den kurzen Hebelarm eines Übersetzungshebels 2 übertragen. Der Übersetzungshebel 2 ist durch ein Kreuzfedergelenk 3 an einem vorkragenden Teil 1' des Basisbereiches 1 verschwenkbar gelagert. Am langen Hebelarm 2' des Übersetzungshebels 2 ist die in Fig. 1 nicht erkennbare Spule befestigt. Diese Spule ragt in den Luftspalt eines nicht eingezeichneten Permanentmagnetsystems, das im Freiraum 10 am Basisbereich 1 befestigbar ist. - Der Aufbau des Kreuzfedergelenkes 3 wird im Folgenden anhand der Fig. 2 bis 4, 5 und 6, 7 beziehungsweise 8 bis 10 erläutert. Aufbau und Funktionsweise der restlichen Teile des Wägesystems sind allgemein bekannt und müssen daher nicht näher erläutert werden.

Die Fig. 2 bis 4 zeigen das Kreuzfedergelenk in einer ersten Ausführungsform bei der beide Federstege zwei beabstandete Dünnstellen aufweisen. Fig. 2 und 3 sind perspektivische Ansichten aus zwei verschiedenen Richtungen, Fig. 4 ist eine Seitenansicht. Man erkennt aus den Figuren, dass das Kreuzfedergelenk 3 im Wesentlichen durch vier waagerechte Bohrungen 31, 32, 33 und 34 mit gleichem Durchmesser aus dem Materialblock 30 herausgearbeitet ist. In Fig. 4 sind die Mittelpunkte dieser Bohrungen durch dünne Achsenkreuze angedeutet. Diese Mittelpunkte befinden sich in den Ecken eines auf der Spitze stehenden Quadrates. Die Bohrung 31 ist im Bereich des Kreuzfedergelenkes nach oben zu einem Durchbruch erweitert, in gleicher Weise ist die Bohrung 33 nach unten zu einem Durchbruch erweitert. Zwischen den vier Bohrungen bleibt zunächst ein kreuzförmiges Innenteil 35 / 35' stehen, das durch vier Materialdünnstellen 36, 37, 38 und 39 mit dem restlichen Block 30 verbunden ist. In einem nächsten Fertigungsschritt wird durch einen senkrechten Schlitz 40 das Kreuzfedergelenk 3 vom Übersetzungshebel 2 getrennt und durch einen weiteren senkrechten Schlitz, dessen rückwärtige Begrenzung 41 in Fig. 2 und 3 erkennbar ist, in zwei Teilbereiche aufgeteilt. Anschließend werden in dem Teilbereich, der in den Figuren vorne liegt, zwei gegenüberliegende Materialdünnstellen am kreuzförmigen Innenteil 35 aufgetrennt, sodass das Innenteil nur noch durch die Materialdünnstellen 36 und 38 mit dem Rest des Blockes verbunden ist. In entsprechender Weise werden in dem in den Figuren hinteren Teilbereich zwei gegenüberliegende Materialdünnstellen am kreuzförmigen Innenteil 35' aufgetrennt, sodass das hintere Innenteil nur noch durch die Materialdünnstellen 37 und 39 mit dem Rest des Blockes verbunden ist.

In der beschriebenen Weise sind zwei getrennte, kreuzförmig angeordnete Federstege entstanden, nämlich der in den Figuren vordere Federsteg 36 / 35 / 38 und der in den Figuren hintere Federsteg 37 / 35' / 39. Beide Federstege zusammen bilden das Kreuzfedergelenk 3.

Die Geometrie des Kreuzfedergelenkes ist im Vorstehenden zum besseren Verständnis anhand einer Herstellungsreihenfolge beschrieben. Diese Reihenfolge ist jedoch nur eine von verschiedenen Möglichkeiten, die erfindungsgemäße Struktur des monolithischen Kreuzfedergelenkes zu erzeugen.

Wesentlich ist, dass durch die vier waagerechten Bohrungen vier Materialdünnstellen erzeugt sind, von denen für jeden Federsteg jeweils zwei entfernt sind. Dadurch ist das Kreuzfedergelenk erst mit vertretbarem Aufwand monolithisch fertigbar. Der Aufbau jedes Federsteges mit zwei Materialdünnstellen, die als Gelenkstellen wirken, macht das Kreuzfedergelenk außerdem unempfindlicher gegenüber Fertigungstoleranzen, da die insgesamt vier Gelenkstellen bei der Bewegung des Kreuzfedergelenkes Fertigungsabweichungen leichter ausgleichen.

In den Fig. 2 bis 4 ist nicht nur im vorderen Bereich des Materialblockes 30 ein Kreuzfedergelenk erzeugt, sondern in entsprechender Weise sind im hinteren Bereich des Blockes hinter dem Übersetzungshebel 2 ebenfalls zwei kreuzförmig angeordnete Federstege erzeugt. Dadurch ist dann der Materialblock 30 in einen Basisbereich 1' und einen Übersetzungshebel 2 unterteilt, die durch zwei Kreuzfedergelenke verschwenkbar miteinander verbunden sind.

Der anhand der Fig. 2 bis 4 erläuterte Materialblock 30 kann entweder als Teil eines Wägesystems benutzt werden, indem der Basisbereich 1' an den Basisbereich 1 des Wägesystems angeschraubt wird, der Übersetzungshebel 2 mit einem langen Hebelarm 2' komplettiert wird und am kurzen Hebelarm ein Koppelelement angeschraubt wird (dazu sind in Fig. 2 schematisch zwei Befestigungslöcher 42 angedeutet); oder der Materialblock 30 wird nicht als gesonderter Block gefertigt, sondern wird zusammen mit den restlichen Teilen des Wägesystems aus einem einzigen größeren Block herausgearbeitet, wie es schon in Fig. 1 zeichnerisch dargestellt ist.

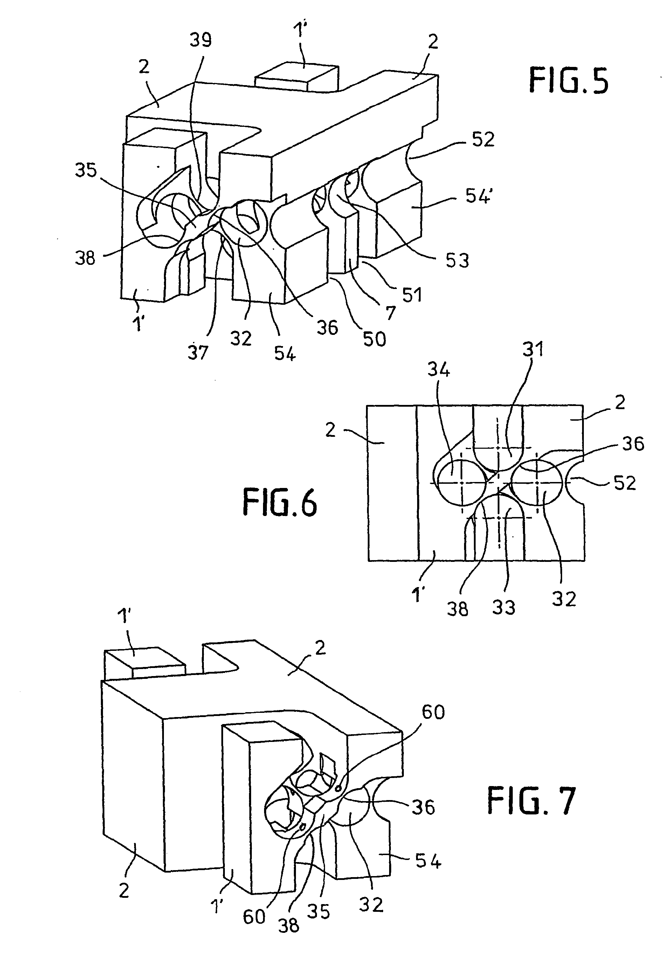

Eine vorteilhafte Ausführungsform, bei der die obere Dünnstelle des Koppelelementes zusammen mit dem Kreuzfedergelenk hergestellt werden kann, ist in den Fig. 5 und 6 dargestellt. Fig. 5 ist eine perspektivische Ansicht, die Blickrichtung entspricht der Blickrichtung in Fig. 2; Fig. 6 ist eine Seitenansicht. Gleiche Teile wie in den Fig. 2 bis 4 sind mit den gleichen Bezugszahlen bezeichnet und werden nicht noch einmal erläutert. Die Ausführungsform gemäß Fig. 5 und 6 weist zwei zusätzliche Schlitze 50 und 51 und eine zusätzliche Bohrung/ Einfräsung 52 auf. Die beiden Schlitze 50 und 51 trennen den oberen Teil des Koppelelementes 7 vom Übersetzungshebel 2 ab. Die Bohrung/Einfräsung 52 erzeugt zusammen mit der für das Kreuzfedergelenk notwendigen Bohrung 32 die obere Gelenkdünnstelle 53 für das Koppelelement. Die Schlitze 50 und 51 sind nur so tief, dass die unteren Teile 54 und 54' des Übersetzungshebels 2 noch stabil mit dem Hauptteil des Übersetzungshebels verbunden bleiben, was in den Figuren jedoch nicht erkennbar ist.

Diese Ausführungsform gemäß Fig. 5 und 6 kann nun leicht zu einem monolithischen Gesamtwägesystem ergänzt werden, das - mit Ausnahme der Spule und des Permanentmagnetsystems - komplett aus einem einzigen Block herausgearbeitet ist. Das in Fig. 1 gezeigte Wägesystem 11 weist eine solche monolithische Bauweise auf.

In Fig.7 ist eine weitere Ausführungsform gezeigt. Gleiche Teile wie in der Ausführungsform gemäß Fig. 5 und 6 sind wieder mit den gleichen Bezugszahlen bezeichnet und werden nicht noch einmal erläutert. Die Ausführungsform gemäß Fig. 7 unterscheidet sich nur durch zusätzliche Ausnehmungen 60 in den Materialdünnstellen 36, 37, 38 und 39. Diese Ausnehmungen sind durch Bohrungen von oben her erzeugt und so angeordnet, dass sie den Rand der Materialdünnstellen nicht berühren. Dadurch verringern sie die Federkonstante des Kreuzfedergelenkes, ohne dessen Stabilität wesentlich zu verringern.

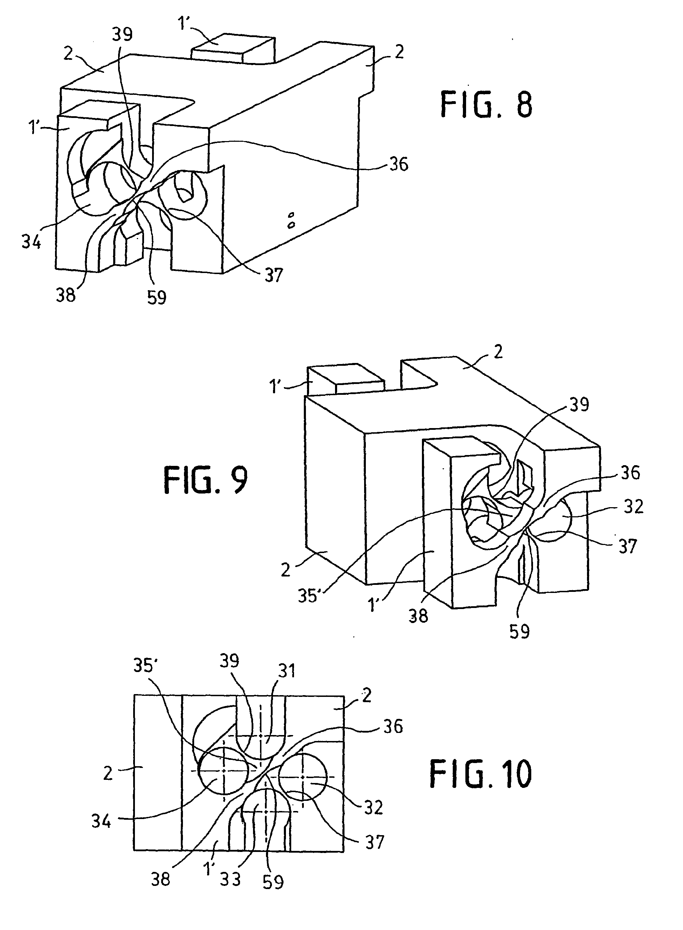

In den Fig. 8 bis 10 ist eine vierte Ausführungsform dargestellt. Die Darstellungsweise entspricht der Darstellungsweise in den Fig. 2 bis 4: Fig. 8 und 9 sind perspektivische Ansichten aus zwei verschiedenen Richtungen, Fig. 10 ist eine Seitenansicht. Gleiche Teile wie in den Fig. 2 bis 4 sind wieder mit den gleichen Bezugszahlen bezeichnet und werden nicht noch einmal erläutert. Bei der Ausführungsform gemäß Fig. 8 bis 10 weist nur der hintere Federsteg 37 / 35' / 39 zwei voneinander beabstandete Materialdünnstellen auf, der vordere Federsteg 36/38 weist nur eine einzige Materialdünnstelle 59 auf. Diese Geometrie ist dadurch erzeugt, dass die Mittelpunkte der Bohrungen 31...34 nicht in den Ecken eines Quadrates, sondern in den Ecken eines Rechteckes mit ungleichen Seiten angeordnet sind. Man erkennt dies am besten in Fig. 10: Der Abstand der Bohrungen 31 und 34 sowie 32 und 33 ist kleiner als der Abstand der Bohrungen 31 und 32 sowie 34 und 33. Dadurch sind die zwischen den Bohrungen verbleibenden Materialdünnstellen 36 und 38 dicker als die Materialdünnstellen 37 und 39. Die Materialdünnstellen 37 und 39 wirken in der schon bei den anderen Ausgestaltungen beschriebenen Weise als Gelenke. Die dickeren "Materialdünnstellen" 36 und 38 sind deutlich stabiler und das eigentliche Gelenk ist zwischen ihnen durch eine zusätzliche Materialdünnstelle 59 erzeugt. Da sich diese Materialdünnstelle 59 nur in dem in den Figuren vorderen Federsteg befindet, lässt sie sich leicht aus dem Block herausarbeiten. Im hinteren Federsteg mit den beabstandeten Materialdünnstellen 37 und 39 wäre solch eine mittige Materialdünnstelle praktisch nicht monolithisch herstellbar. - Diese Ausgestaltung mit den zwei beabstandeten Materialdünnstellen 37 und 39 im hinteren Federsteg und der Materialdünnstelle 59 als einzigem Gelenk im vorderen Federsteg hat den Vorteil, dass der kinematische Drehpunkt des Kreuzfedergelenkes wenigstens in einer Richtung exakter festgelegt ist. Dieses Kreuzfedergelenk verhält sich daher ähnlicher als die üblichen nichtmonolithischen Kreuzfedergelenke, bei denen sich die Dünnstellen beider Federstege direkt im Kreuzungspunkt befinden (wie zum Beispiel in der schon zitierten US 3 700 289). Dies ist besonders dann vorteilhaft, wenn die beiden Federstege des Kreuzfedergelenkes nicht unter +/-45° zur Horizontalen angeordnet sind - wie in den gezeichneten Beispielen - , sondern horizontal und vertikal angeordnet sind.

### Bezugszeichenliste

- 1: Basisbereich
- 1': Teil des Basisbereiches
- 2: Übersetzungshebel
- 2': Langer Hebelarm des Übersetzungshebels
- 3: Kreuzfedergelenk
- 4: Lastaufnehmer
- 5: Oberer Lenker
- 6: Unterer Lenker
- 7: Koppelelement
- 8: Vorsprung am Lastaufnehmer
- 9: Materialdünnstellen (Gelenke)
- 10: Freiraum für ein Permanentmagnetsystem
- 11: Wägesystem
- 12: Bohrungen
- 30: Materialblock
- 31: Bohrung
- 32: Bohrung
- 33: Bohrung
- 34: Bohrung
- 35, 35': Innenteil
- 36: Materialdünnstelle
- 37: Materialdünnstelle
- 38: Materialdünnstelle
- 39: Materialdünnstelle
- 40: Schlitz
- 41: Schlitzbegrenzung
- 42: Befestigungslöcher
- 50: Schlitz
- 51: Schlitz
- 52: Bohrung/Einfräsung
- 53: Gelenkdünnstelle
- 54, 54': Teile des Übersetzungshebels 2
- 59: Materialdünnstelle
- 60: Ausnehmung

## Patentansprüche

1. Wägesystem mit einem Basisbereich (1), mit einem parallelgeführten Lastaufnehmer (4), mit mindestens einem Übersetzungshebel (2), der durch mindestens ein Kreuzfedergelenk (3) am Basisbereich (1) verschwenkbar gelagert ist, und mit einem Koppelelement (7), das den Lastaufnehmer (4) mit dem kurzen Hebelarm des Übersetzungshebels (2) verbindet, **dadurch gekennzeichnet, dass** das Kreuzfedergelenk (3), zumindest ein Teil des Übersetzungshebels (2) und zumindest ein Teil des Basisbereiches (1') monolithisch aus einem Block herausgearbeitet sind und zumindest ein Federsteg (36/35/38, 37/35'/39) des Kreuzfedergelenkes (3) zwei voneinander beabstandete Materialdünnstellen (36, 38; 37, 39) aufweist.

2. Wägesystem nach Anspruch 1, **dadurch gekennzeichnet, dass** beide Federstege (36/35/38, 37/35'/39) des Kreuzfedergelenkes (3) zwei voneinander beabstandete Materialdünnstellen aufweisen.

3. Wägesystem nach Anspruch 2, **dadurch gekennzeichnet, dass** die beiden Federstege im Wesentlichen von vier waagerechten, parallel zur Drehachse des Kreuzfedergelenkes verlaufenden Bohrungen (31, 32, 33, 34) begrenzt sind, dass die Mittelpunkte der vier Bohrungen (31, 32, 33, 34) in den Ecken eines Quadrates angeordnet sind, dass die Bohrungen (31, 32, 33, 34) gleichen Durchmesser aufweisen und dass die Kantenlänge des Quadrates um die Dicke der Materialdünnstellen (36, 37, 38, 39) größer ist als der Durchmesser der Bohrungen (31, 32, 33, 34).

4. Wägesystem nach Anspruch 1, **dadurch gekennzeichnet, dass** die beiden Federstege im Wesentlichen von vier waagerechten, parallel zur Drehachse des Kreuzfedergelenkes verlaufenden Bohrungen (31, 32, 33, 34) begrenzt sind, dass die Mittelpunkte der vier Bohrungen (31, 32, 33, 34) in den Ecken eines Rechteckes angeordnet sind, dass die Bohrungen (31, 32, 33, 34) gleichen Durchmesser aufweisen, und dass die kürzere Seite des Rechteckes um die Dicke der Materialdünnstellen (37,39) größer ist als der Durchmesser der Bohrungen (31, 32, 33, 34).

5. Wägesystem nach einem der Ansprüche 1 bis 4, **dadurch gekennzeichnet, dass** das Kreuzfedergelenk (3) zwei Paar Federstege aufweist, wobei das eine Paar (36/35/38, 37/35'/39) in Achsrichtung des Kreuzfedergelenkes (3) beabstandet vom anderen Paar angeordnet ist.

6. Wägesystem nach einem der Ansprüche 1 bis 5, **dadurch gekennzeichnet, dass** die Materialdünnstellen (36,37,38,39) durch Ausnehmungen (60), die nicht den Rand der Materialdünnstellen (36, 37, 38, 39) berühren, geschwächt sind.

7. Wägesystem nach einem der Ansprüche 1 bis 6, **dadurch gekennzeichnet, dass** außer dem Basisbereich (1), dem Übersetzungshebel (2) und dem Kreuzfedergelenk (3) auch der Lastaufnehmer (4), die Lenker (5, 6) der Parallelführung und das Koppelelement (7) monolithisch aus einem Block herausgearbeitet sind.

8. Wägesystem nach Anspruch 3 und 7, **dadurch gekennzeichnet, dass** eine der vier waagerechten Bohrungen (32) für das Kreuzfedergelenk (3) gleichzeitig eine Dünnstelle des Koppelelementes (7) begrenzt.

## Claims

1. Weighing system with a base region (1), with a load receiver (4) with parallel guidance, with at least one translation lever (2), which is pivotably mounted at the base region (1) by at least one cruciform spring joint (3), and with a coupling element (7) connecting the load receiver (4) with the short lever arm of the translation lever (2), **characterised in that** the cruciform spring joint (3), at least a part of the translation lever (2) and at least a part of the base region (1') are monolithically formed from one block and at least one spring web (36/35/38, 37/35'/39) of the cruciform spring joint (3) has two mutually spaced material thin points (36, 38', 37, 39).

2. Weighing system according to claim 1, **characterised in that** the two spring webs (36/35/38, 37/35'/39) of the cruciform spring joint (3) have two mutually spaced material thin points.

3. Weighing system according to claim 2, **characterised in that** the two spring webs are substantially bounded by four horizontal bores (31, 32, 33, 34) extending parallel to the axis of rotation of the cruciform spring joint, that the centre points of the four bores (31, 32, 33, 34) are arranged in the corners of a square, that the bores (31, 32, 33, 34) have the same diameter and that the edge length of the square is greater by the thickness of the material thin points (36, 37, 38, 39) than the diameter of the bores (31, 32, 33, 34).

4. Weighing system according to claim 1, **characterised in that** the two spring webs are substantially bounded by four horizontal bores (31, 32, 33, 34) extending parallel to the axis of rotation of the cruciform spring joint, that the centre points of the four bores (31, 32, 33, 34) are arranged in the corners of a rectangle, that the bores (31, 32, 33, 34) have the same diameter and that the shorter side of the rectangle is greater by the thickness of the material thin points (36, 37, 38, 39) than the diameter of the bores (31, 32, 33, 34).

5. Weighing system according to any one of claims 1 to 4, **characterised in that** the cruciform spring joint (3) has two pairs of spring webs, wherein one pair (36/35/38, 37/35'/39) is arranged at a spacing from the other pair in the axial direction of the cruciform spring joint (3).

6. Weighing system according to any one of claims 1 to 5, **characterised in that** the material thin points (36, 37, 38, 39) are weakened by recesses (60) which do not contact the edge of the material thin points (36, 37, 38, 39).

7. Weighing system according to any one of claims 1 to 6, **characterised in that** apart from the base region (1), the translation lever (2) and the cruciform spring joint (3) also the load receiver (4), the links (5, 6) of the parallel guide and the coupling element (7) are monolithically formed from one block.

8. Weighing system according to claims 3 and 7, **characterised in that** one of the four horizontal bores (32) for the cruciform spring joint (3) at the same time bounds a thin point of the coupling element (7).

## Revendications

1. Système de pesée comprenant une zone de base (1), un récepteur de charge à guidage parallèle (4), au moins un levier de transmission (2) qui est logé de manière pivotante grâce à au moins un pivot à lames flexibles (3) sur la zone de base (1), et un élément de couplage (7) qui relie le récepteur de charge (4) au bras court du levier de transmission (2), **caractérisé en ce que** le pivot à lames flexibles (3), au moins une partie du levier de transmission (2) et au moins une partie de la zone de base (1') sont façonnés de manière monolithique dans un bloc et au moins une barrette à ressort (36/35/38, 37/35'/39) du pivot à lames flexibles (3) présente deux régions amincies de matière espacées (36, 38 ; 37, 39).

2. Système de pesée selon la revendication 1, **caractérisé en ce que** les deux barrettes à ressort (36/35/38, 37, 35'/39) du pivot à lames flexibles (3) présentent deux régions amincies de matière espacées.

3. Système de pesée selon la revendication 2, **caractérisé en ce que** les deux traverses de ressort sont limitées essentiellement par quatre perçages (31, 32, 33, 34) horizontaux, s'étendant parallèlement à l'axe de rotation du pivot à lames flexibles, **en ce que** les points centraux des quatre perçages (31, 32, 33, 34) sont disposés dans les angles d'un carré, **en ce que** les perçages (31, 32, 33, 34) présentent le même diamètre et **en ce que** la longueur d'arête du carré est plus grande de l'épaisseur des régions amincies de matière (36, 37, 38, 39) que le diamètre des perçages (31, 32, 33, 34).

4. Système de pesée selon la revendication 1, **caractérisé en ce que** les deux barrettes à ressort sont limitées essentiellement par quatre perçages (31, 32, 33, 34) horizontaux, s'étendant parallèlement à l'axe de rotation du pivot à lames flexibles, **en ce que** les points centraux des quatre **perçages** (31, 32, 33, 34) sont disposés dans les angles d'un rectangle, **en ce que** les perçages (31, 32, 33, 34) présentent le même diamètre et **en ce que** le plus petit côté du rectangle est plus grand de l'épaisseur des régions amincies de matière (37, 39) que le diamètre des perçages (31, 32, 33, 34).

5. Système de pesée selon l'une quelconque des revendications 1 à 4, **caractérisé en ce que** le pivot à lames flexibles (3) présente deux paires de barrette à ressort, une paire (36/35/38, 37/35'/39) étant disposée dans le sens de l'axe du pivot à lames flexibles (3) à distance de l'autre paire.

6. Système de pesée selon l'une quelconque des revendications 1 à 5, **caractérisé en ce que** les régions amincies de matière (36, 37, 38, 39) sont affaiblies par des évidements (60) qui ne touchent pas le bord des régions amincies de matière (36, 37, 38, 39).

7. Système de pesée selon l'une quelconque des revendications 1 à 6, **caractérisé en ce que** hormis la zone de base (1), le levier de transmission (2) et le pivot à lames flexibles (3), le récepteur de charge (4), les bras (5, 6) du guidage parallèle et l'élément de couplage (7) sont également façonnés de manière monolithique dans un bloc.

8. Système de pesée selon les revendications 3 et 7, **caractérisé en ce que** l'un des quatre perçages (32) horizontaux pour le pivot à lames flexibles (3) délimite simultanément une région amincie de l'élément de couplage (7).
